# FASCICULE DE BREVET EUROPEEN

(11) **EP 4 264 711 B1**
(45) Date de publication et mention de la délivrance du brevet: **05.02.2025**
(21) Numéro de dépôt: 21823579.4
(22) Date de dépôt: 06.12.2021
(51) Int. Cl.: H01M 4/58, H01M 10/42, H01M 10/48, H01M 50/204, H01M 50/249, H01M 4/02

(54) **MODULE DE STOCKAGE D'ÉNERGIE ÉLECTRIQUE POUR UN VÉHICULE**
ELEKTRISCHES ENERGIESPEICHERMODUL FÜR EIN FAHRZEUG
ELECTRIC ENERGY STORAGE MODULE FOR A VEHICLE

(30) Priorité: 16.12.2020 FR 2013384
(43) Date de publication de la demande: 25.10.2023
(73) Titulaire: Ampere SAS, 92100 Boulogne-Billancourt (FR)
(72) Inventeur: EMERY, Nicolas, 78180 Montigny-le-Bretonneux (FR); PEREIRA-RAMOS, Jean-Pierre, 94440 Marolles en Brie (FR); PETRISSANS, Xavier, 78084 GUYANCOURT (FR); ZHOU, Yanlong, 78084 GUYANCOURT (FR)
(74) Mandataire: Renault Group
(86) Numéro de dépôt international: PCT/EP2021/084444
(87) Numéro de publication internationale: WO 2022/128582

(56) Documents cités:
- JP-A- H07 130 366
- US-A1- 2019 081 370

## Description

La présente invention se rapporte au domaine des batteries électriques pour le stockage d'énergie électrique. Plus précisément, l'invention concerne un module de stockage d'énergie électrique pour un véhicule et notamment pour un véhicule automobile.

Les batteries électriques basées sur des accumulateurs électrochimiques de type lithium-ion, couramment appelés « cellules lithium-ion », sont de plus en plus utilisées comme source d'énergie autonome, en particulier dans les applications liées à la mobilité électrique. Cette tendance s'explique notamment par des densités d'énergie massique et volumique nettement supérieures à celles des accumulateurs classiques nickel cadmium (Ni-Cd) et nickel-hydrure métallique (Ni-MH), une absence d'effet mémoire, une autodécharge faible par rapport à d'autres accumulateurs et également un faible coût au kilowattheure.

Une batterie électrique comprend, généralement, une pluralité de modules de stockage d'énergie disposés côte à côte et reliés électriquement. Chaque module de stockage d'énergie comporte une pluralité d'accumulateurs d'énergie électrique. Ces accumulateurs sont disposés côte à côte dans un boîtier participant à délimiter le module de stockage d'énergie et ces accumulateurs sont reliés électriquement les uns aux autres. Une telle configuration permet à la batterie d'avoir un stockage d'énergie important et d'augmenter la tension disponible pour l'alimentation du véhicule tout en restant opérationnelle en cas de court-circuit d'un des accumulateurs, notamment en permettant de désactiver le module correspondant à cet accumulateur défectueux et de continuer à assurer l'alimentation avec les autres modules de stockage d'énergie, moyennant des dispositifs additionnels de commutation et de pilotage.

Au cours de son utilisation, la batterie électrique peut subir un problème électrique tel qu'un court-circuit dans un accumulateur et/ou un problème mécanique tel qu'un choc impactant un accumulateur. Ces problèmes peuvent mener à l'emballement thermique de la batterie électrique particulièrement lorsqu'elle comprend des accumulateurs lithium-ion. L'emballement thermique peut avoir pour conséquence une augmentation de pression dans l'accumulateur et/ou dans le module, un dégagement de gaz, un dégagement de fumée, un départ d'incendie et/ou des projections de matières.

Dans ce contexte, la réglementation internationale impose aux constructeurs automobiles de détecter l'emballement thermique de la batterie électrique assez tôt afin d'une part de garantir la sécurité des occupants du véhicule automobile en leur permettant d'évacuer le véhicule avant que l'habitacle ne soit envahi par un dégagement de fumée, et d'autre part de permettre à des moyens de sécurité de fonctionnement appropriés d'isoler électriquement la batterie pour faciliter des interventions de sécurité éventuelles.

La détection de l'emballement thermique est basée, dans la majorité des cas, sur la mesure de pression régnant au sein des modules étanches. Cette mesure de pression consiste notamment à envoyer une information d'emballement thermique lorsque la pression mesurée est supérieure à un seuil critique prédéterminé. Une telle technique est basée sur l'évolution de conditions existantes au sein du module de stockage et elle présente le désavantage d'être dépendante des conditions environnementales. A titre d'exemples non limitatifs, la circulation du véhicule automobile à différentes altitudes peut impacter la pression dans la batterie et/ou au sein des modules de stockage d'énergie, et le passage de ce véhicule dans un tunnel peut modifier la composition de l'air susceptible de pénétrer dans la batterie et donc modifier la répartition des composants gazeux et les mesures de pression effectuées. Il est donc nécessaire de prévoir un seuil de détection suffisamment haut afin d'éviter de fausses alertes concernant l'emballement thermique. Par conséquent, le temps nécessaire pour atteindre ce seuil de détection est allongé et en conséquence le temps disponible pour les occupants afin d'évacuer le véhicule peut être considérablement réduit et leur sécurité peut être compromise.

Alternativement à la méthode précédemment décrite, le document US9046580 divulgue une méthode de détection d'une défaillance d'un accumulateur dans un module de batterie sur la base de la mesure des variations de la résistance de l'isolation électrique du module. Cette méthode peut aussi inclure la surveillance des effets secondaires de la défaillance de l'accumulateur et/ou du module comme par exemple la perte de continuité de la chaîne de tension, la température du module qui dépasse une température seuil, l'humidité qui dépasse une humidité seuil et/ou la température du liquide de refroidissement associée à un système de refroidissement du module qui dépasse une température de refroidissement seuil.

Ces méthodes ont donc pour inconvénient de devoir évaluer une montée en température et/ou une montée en pression et/ou un changement du taux d'humidité pour détecter la défaillance de l'accumulateur et/ou du module en prenant en compte les conditions environnementales. Conformément à ce qui a pu être évoqué précédemment, la mise en sécurité des occupants peut être alors retardée ce qui a pour conséquence de les mettre dans une situation dangereuse. D'autres éléments pertinents de l'art antérieur sont divulgués dans US2019/081370 A1.

La présente invention a pour objectif de palier au moins un des inconvénients précités et de conduire en outre à d'autres avantages en proposant un nouveau type de module de stockage d'énergie pour une batterie électrique de véhicule, notamment automobile. La présente invention est définie dans les revendications annexées.

La présente invention propose un module de stockage d'énergie électrique pour un véhicule, notamment automobile, qui comprend une pluralité d'accumulateurs d'énergie électrique comportant, chacun, au moins une électrode négative composée au moins en partie de nitrure de lithium-métal, et ledit module de stockage d'énergie comporte en outre au moins un capteur d'ammoniac pour détecter un dégagement d'ammoniac due à la décomposition du nitrure de lithium-métal de l'électrode négative en présence d'air ou d'humidité.

Il faut entendre ici, ainsi que dans tout ce qui suit, que le terme « ammoniac » désigne un composé de formule chimique NH₃ qui se présente sous la forme d'un gaz à température ambiante.

L'invention repose sur la détection de la présence d'ammoniac au lieu d'une mesure de pression, de température et/ou de taux d'humidité tel que cela a été décrit dans l'art antérieur. Il convient alors de noter que l'invention se distingue avantageusement de l'art antérieur en ce qu'elle base la détection précoce de l'emballement thermique par une détection d'un gaz non présent dans le module de stockage dans une condition de roulage normales du véhicule, ce gaz n'apparaissant que dans des conditions anormales dues à un choc ou une usure qui impliquent la mise au contact de l'air de l'électrode négative d'au moins un accumulateur.

Plus particulièrement, les différentes couches d'un accumulateur d'énergie électrique de type lithium-ion sont enfermées dans une poche étanche à l'air de sorte que chacune de ces couches, et notamment l'électrode négative, ne peut être exposée à de l'air et/ou à de l'humidité contenue dans l'air que lorsqu'une fuite apparaît au niveau de la poche. En cas d'une telle fuite, qui peut être due à une usure de l'accumulateur ou à un choc subi par le véhicule, cette exposition provoque la décomposition du nitrure de lithium-métal et sa transformation en ammoniac. Le capteur d'ammoniac du module de stockage d'énergie va alors détecter la présence d'ammoniac. Etant donné que le capteur d'ammoniac est spécifique à l'ammoniac, il est donc indépendant des conditions environnementales et le seuil de détection peut être très faible. La détection d'un dysfonctionnement peut alors être immédiate, dès détection d'une particule d'ammoniac, sans qu'il soit nécessaire que le taux d'ammoniac présent dans l'air atteigne un seuil critique.

Il est notable dans ce contexte que la décomposition du nitrure de lithium-métal de l'électrode négative n'est pas forcément synonyme d'un emballement thermique, la fuite au niveau de la poche étanche de l'accumulateur pouvant être due à une usure et être sans danger immédiat. Il est toutefois avantageux que l'occupant du véhicule soit prévenu de cette fuite en amont, avant un emballement thermique du module de stockage d'énergie. Cela peut laisser le temps à l'occupant d'aller en concession de manière fiable pour faire changer le module de stockage d'énergie, voire la batterie électrique. La sécurité de l'occupant est donc améliorée.

Par ailleurs, l'ammoniac formé par la décomposition du nitrure de lithium-métal de l'électrode négative, spécifique à la présente invention, va générer la formation de diazote gazeux en présence d'oxygène contenu dans l'air et à température élevée. Ceci va alors permettre de diminuer la quantité de comburant à l'intérieur du module de stockage électrique lors d'un départ de feu par exemple et donc de retarder l'emballement thermique notamment jusqu'à l'arrivée des pompiers.

Selon un mode de réalisation, chaque accumulateur d'énergie électrique comporte au moins une électrode positive et un séparateur, en plus d'une électrode négative.

Selon un mode de réalisation, le séparateur est agencé entre l'électrode négative et l'électrode positive formant ainsi un empilement.

Selon un mode de réalisation, chaque accumulateur d'énergie électrique comprend une enveloppe dans laquelle est disposé l'empilement formé par au moins l'électrode positive, le séparateur et l'électrode négative. On comprend, par rapport à ce qui a été évoqué précédemment, que l'enveloppe forme une enceinte étanche dans laquelle les différentes électrodes sont agencées et que c'est la rupture d'étanchéité de cette enveloppe qui va créer la mise à l'air libre de l'électrode négative et la création d'ammoniac.

Selon un mode de réalisation, le métal du nitrure de lithium-métal est choisi parmi le groupe des métaux de transition.

Selon un mode de réalisation, le métal du nitrure de lithium-métal est choisi parmi le groupe comportant le fer, le manganèse et leur mélange.

Selon un mode de réalisation, le nitrure de lithium-métal est délithié. Il faut entendre ici, ainsi que dans tout ce qui suit, par « délithié » que le nitrure de lithium métal comprend des vacances dans sa structure lui permettant d'accueillir des ions lithium notamment lorsque l'accumulateur d'énergie électrique est rechargé.

Selon un mode de réalisation, le nitrure de lithium-métal est composé au moins en partie de nitrure de lithium-manganèse dont la formule est Li₇₋ₓMnN₄ avec x ≤ 2,0 et/ou de nitrure de lithium-fer dont la formule est Li₃₋ₓFeN₂, avec x ≤ 1,2.

Selon un mode de réalisation, le module de stockage d'énergie comporte un capteur d'ammoniac commun à plusieurs accumulateurs d'énergie électriques. Plus particulièrement, le module de stockage d'énergie électrique comporte un boitier formant un logement pour la pluralité d'accumulateurs d'énergie électrique, le capteur d'ammoniac étant disposé à l'intérieur du boîtier. Le capteur d'ammoniac peut être fixé sur une face interne d'une des parois du boitier. Lorsque le capteur détecte la présence d'ammoniac dans le module, une mise à l'air libre d'un accumulateur est identifiée et les accumulateurs présents dans le module doivent être changés de façon préventive pour la sécurité de l'occupant.

De manière alternative, un capteur d'ammoniac peut être prévu pour chaque accumulateur d'énergie électrique. On comprend que dans cette alternative, la détection est plus précise et que l'on peut identifier de manière ciblée quel accumulateur présente un défaut et notamment quelle enveloppe d'accumulateur laisse passer de l'air. Cette alternative de réalisation présente toutefois un coût de fabrication plus important et il peut être privilégié un compromis dans lequel un capteur d'ammoniac est commun à plusieurs accumulateurs, pour réduire les coûts et malgré tout permettre une intervention sans nécessiter de remplacer tous les accumulateurs mais uniquement ceux à proximité du capteur.

Selon un mode de réalisation, le capteur d'ammoniac est choisi parmi un détecteur catalytique, un détecteur catharométrique, un détecteur à rayonnement infra-rouge, un détecteur électrochimique ou un détecteur à photoionisation.

La présente invention concerne par ailleurs une batterie électrique comprenant une pluralité de modules de stockage d'énergie et dans laquelle au moins un module de la pluralité de modules présente au moins une des caractéristiques précédemment décrites.

La présente invention a aussi trait à un véhicule comprenant au moins une batterie électrique selon un aspect de l'invention.

Le véhicule peut-être un véhicule automobile, un véhicule électrique routier motorisé à deux ou trois roues, un vélocipède électrique, ou une trottinette électrique.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] La figure 1 est une représentation schématique d'une batterie électrique de véhicule comprenant une pluralité de modules de stockage d'énergie selon l'invention ;
[fig 2] La figure 2 est une représentation schématique d'un module de stockage d'énergie selon un aspect de l'invention ;
[fig 3] La figure 3 est une représentation schématique d'un accumulateur d'énergie électrique apte à équiper le module de stockage d'énergie de la figure 2 ;
[fig 4] La figure 4 est une représentation schématique partielle de l'accumulateur d'énergie électrique de la figure 3, une coupe rendant visible des composants de l'accumulateur logés à l'intérieur de l'enveloppe visible sur la figure 3.

Il faut tout d'abord noter que si les figures exposent l'invention de manière détaillée pour sa mise en oeuvre, elles peuvent bien entendu servir à mieux définir l'invention le cas échéant. Il est également à noter que, sur l'ensemble des figures, les éléments similaires et/ou remplissant la même fonction sont indiqués par la même numérotation.

L'invention porte notamment sur un module de stockage d'énergie électrique particulier en ce qu'il comporte au moins un accumulateur dont la constitution est spécifique avec une électrode négative différente de ce qui peut être classiquement mis en oeuvre et en ce qu'il comporte dans ce contexte un capteur d'ammoniac.

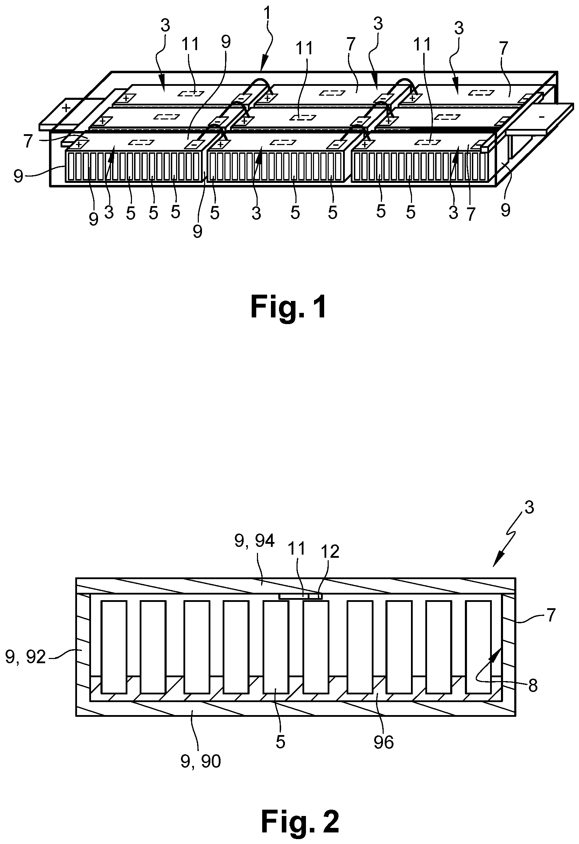

En référence à la figure 1, on a illustré une pluralité de ces modules de stockage d'énergie électrique 3 comprenant chacun une pluralité d'accumulateurs d'énergie électrique 5. De tels modules de stockage d'énergie électrique 3 peuvent constituer une batterie électrique 1 mais aussi un condensateur ou une supercapacité. La batterie électrique peut être utilisée dans n'importe quel véhicule par exemple un véhicule automobile, véhicule électrique routier motorisé à deux ou trois roues, un vélocipède électrique, ou une trottinette électrique.

Le module de stockage d'énergie électrique 3 comprend un boitier 7 dont les parois 9 forment un logement pour une pluralité d'accumulateurs d'énergies électriques 5 et au moins un capteur d'ammoniac 11. Dans l'exemple illustré, le boîtier 7 présente ici une forme parallélépipédique avec six parois, parmi lesquelles on peut distinguer, tel que cela est notamment plus visible sur la figure 2, une paroi de fond 90, des parois latérales 92 et un couvercle de fermeture 94.

Les accumulateurs d'énergie électriques 5 sont disposés contre la paroi de fond 90, le cas échéant dans une matrice 96 qui permet d'assurer le positionnement des accumulateurs les uns par rapport aux autres et par rapport aux parois du boîtier 7.

Le capteur d'ammoniac 11 est agencé à l'intérieur du boîtier, c'est-à-dire, tel qu'illustré sur la figure 2, dans le logement formé par les parois 9 du boitier 7 du module de stockage d'énergie électrique 3. De la sorte, un capteur d'ammoniac 11 est commun à une pluralité d'accumulateurs 5.

Le capteur d'ammoniac 11 comporte, ou est associé à, des moyens de communications 12 configurés pour transmettre une information de détection d'ammoniac à un module de contrôle apte à émettre un signal d'avertissement à l'occupant et/ou émettre une instruction de coupure d'alimentation de la batterie électrique ou au moins du module de stockage d'énergie correspondant. Dans l'exemple illustré, les moyens de communications consistent en des moyens de communication sans fil étant entendu que ceci n'est pas limitatif de l'invention.

Dans l'exemple illustré sur la figure 2, le capteur d'ammoniac 11 est agencé sur une face interne 8 d'une des parois 9 du boitier 7, et plus particulièrement ici sur la face interne du couvercle de fermeture 94. Il convient de noter que la position du capteur d'ammoniac sur le couvercle de fermeture n'est pas limitative de l'invention. Toutefois, il est avantageux que d'une part le capteur d'ammoniac 11 ne soit pas en contact mécanique avec les accumulateurs d'énergie électriques 5, et que d'autre part le capteur d'ammoniac 11 soit disposé dans une position centrale pour que la distance entre ce capteur d'ammoniac et l'accumulateur 5 dont le capteur est le plus éloigné soit la plus petite possible.

Le capteur d'ammoniac 11 peut être un détecteur catalytique, un détecteur catharométrique, un détecteur à rayonnement infra-rouge, un détecteur électrochimique ou un détecteur à photoionisation.

Le détecteur catalytique repose sur la mesure de la chaleur de combustion des molécules d'ammoniac à la surface d'un catalyseur métallique.

Le détecteur catharométrique est configuré pour mesurer la variation de conductivité thermique de l'atmosphère provoquée par la présence d'ammoniac.

Le détecteur à rayonnement infra-rouge repose sur l'absorption d'un rayonnement infra-rouge par les molécules d'ammoniac.

Le détecteur électrochimique est basé sur une réaction d'oxydo-réduction à température ambiante. Les molécules d'ammoniac s'adsorbent à la surface d'un catalyseur et réagissent avec les ions d'une solution provoquant un courant électrique.

Le détecteur à photoionisation est un détecteur d'ions utilisant des photons énergétiques dans la gamme des ultraviolets pour ioniser les molécules de gaz d'ammoniac. Le gaz d'ammoniac est bombardé par des photons, ce qui permet d'arracher des électrons aux molécules du gaz, les transformant ainsi en cations. Les molécules gaz sont donc ionisées ce qui permet l'établissement d'un courant électrique. La détection d'un courant électrique peut alors être assimilé à la présence d'ammoniac. Ce type de détecteur est non destructif, car il ne modifie pas les molécules de gaz d'ammoniac qu'il détecte.

Le choix de tel ou tel type de capteur d'ammoniac peut notamment être effectué en fonction de l'encombrement des détecteurs précédemment cités et de la place disponible dans le boîtier du module de stockage d'énergie.

Selon l'invention, la présence du capteur d'ammoniac 11 dans le module de stockage d'énergie est combinée à la caractéristique selon laquelle au moins un accumulateur comporte une électrode spécifique.

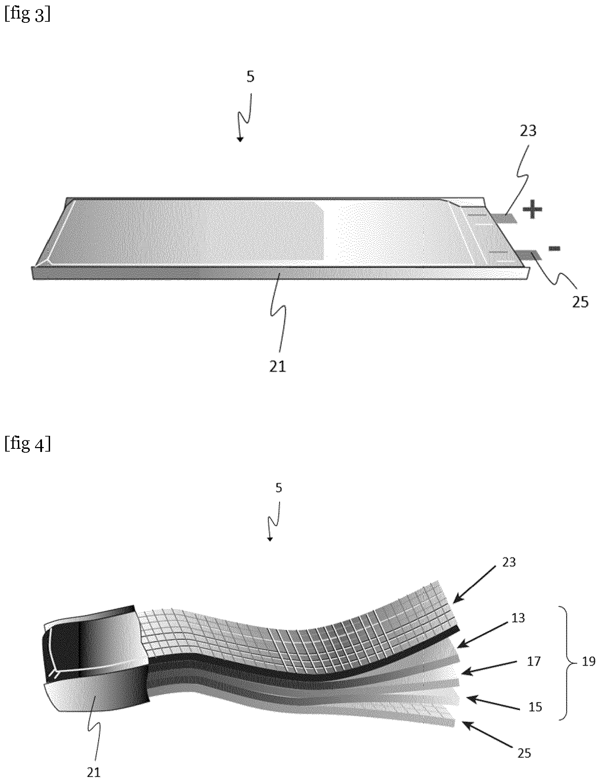

En référence aux figures 3 et 4, chaque accumulateur d'énergie électrique 5 comprend au moins une électrode positive 13, au moins une électrode négative 15 et au moins un séparateur 17. Les accumulateurs d'énergie électrique 5 sont, chacun, assemblés par empilement de l'électrode positive 13, de l'électrode négative 15 et du séparateur 17 qui est intercalé entre les deux électrodes 13, 15. Le séparateur 17 peut être imprégné d'une solution contenant au moins un électrolyte.

Cet empilement forme un coeur électrochimique 19 qui est ensuite placé dans une enveloppe 21 de sorte qu'une borne positive 23 et une borne négative 25 de l'accumulateur d'énergie électrique 5, visibles sur la figure 3, sont accessibles depuis l'extérieur de l'enveloppe 21 et peuvent être raccordés à un réseau d'alimentation électrique au sein de la batterie électrique du véhicule.

L'enveloppe 21 forme une enceinte étanche qui protège le coeur électrochimique 19 de l'air. Dans l'exemple illustré sur les figures, l'enveloppe consiste en une poche sensiblement plane et l'empilement des électrodes et du séparateur au sein de cette enveloppe consiste en une superposition de couches sensiblement planes. Il convient de comprendre que ceci n'est pas limitatif de l'invention, et que d'autres modes de réalisation d'accumulateur pourrait être mis en oeuvre ici, avec par exemple une enveloppe cylindrique à l'intérieur de laquelle l'empilement des électrodes et du séparateur présente également une forme enroulée pour être logée dans l'enveloppe.

L'électrode positive 13 forme la cathode lorsque l'accumulateur d'énergie électrique 5 se décharge et donc la batterie électrique 1 se décharge. L'électrode positive 13 peut être composé d'au moins un matériau actif, éventuellement d'au moins un agent de conduction électronique, et éventuellement d'au moins un liant.

Le matériau actif de l'électrode positive 13 est délithié c'est-à-dire qu'il est notamment capable d'insérer réversiblement des ions lithium à un potentiel supérieur au potentiel de fonctionnement de l'électrode négative 15.

La teneur en matériau actif de l'électrode positive 13 peut être de 5 à 98% en poids, la teneur en agent de conduction électronique peut être de 0,1 à 30% en poids, et la teneur en liant peut être de 0 à 25% en poids, par rapport au poids total de l'électrode positive 13.

Le matériau actif de l'électrode positive 13 peut être composé d'un certain nombre d'oxydes. A titre d'exemple, le matériau actif de l'électrode positive 13 peut être : le dioxyde de manganèse (MnO₂) ; l'oxyde de fer ; l'oxyde de cuivre ; l'oxyde de nickel ; les oxydes composites lithium-manganèse (e.g. LiₓMn₂O₄ ou LiₓMnO₂) ; les oxydes composites lithium-nickel (e.g. LiₓNiO₂) ; les oxydes composites lithium-cobalt (e.g. LiₓCoO₂) ; les oxydes composites lithium-nickel-cobalt (e.g. LiNi_{1-y}Co_{y}O2) ; les oxydes composites lithium-nickel-cobalt-manganèse (e.g. LiNiₓMn_{y}Co_{z}O₂, avec x+y+z=1) ; les oxydes composites lithium-nickel-cobalt-manganèse enrichis en lithium (e.g. Li₁₊ₓ(NiMnCo)₁₋ₓO₂) ; les oxydes composites de lithium et de métal de transition ; les oxydes composites de lithium-manganèse-nickel de structure spinelle (e.g. LiₓMn_{2-y}Ni_{y}O₄) ; les oxydes lithium-phosphore de structure olivine (e.g. LiₓFePO₄, LiₓFe_{1-y}Mn_{y}PO₄ ou LiₓCoPO₄) ; le sulfate de fer (Fe₂(SO₄)₃) ; et les oxydes de vanadium (e.g. V₂O₅).

L'agent de conduction électronique peut être un matériau carboné, par exemple du noir de carbone, du noir d'acétylène, du graphite naturel ou synthétique, des nanotubes de carbone, ou un de leurs mélanges.

Le liant peut être un polymère choisi par exemple parmi les copolymères d'éthylène et de propylène contenant éventuellement un motif permettant la réticulation ; les copolymères styrène-butadiène, tels que par exemple les caoutchoucs de styrène-butadiène (SBR) ; les copolymères acrylonitrile-butadiène (ABR) ; les poly(tétrafluoroéthylène), tels que par exemple le polytétrafluoroétylène (PTFE) ou le polyvinylidène difluoride (PVDF); les dérivés de cellulose, tels que par exemple la carboxyméthyle cellulose (CMC) ou l'hydroxyéthylcellulose (HEC).

L'électrode négative 15 comprend au moins un matériau actif, éventuellement un agent de conduction électronique, et éventuellement un liant. Le matériau actif de l'électrode négative 15 est délithié c'est-à-dire qu'il est notamment capable d'insérer réversiblement des ions lithium à un potentiel inférieur au potentiel de fonctionnement de l'électrode positive 13.

Selon l'invention, le matériau actif de l'électrode négative 15 est composée de nitrure de lithium-métal. C'est cette configuration particulière d'une électrode d'un accumulateur qui, combinée à la présence d'un capteur d'ammoniac 11 tel qu'évoqué précédemment, c'est-à-dire présent dans le module de stockage d'énergie et/ou la batterie dans lequel ledit accumulateur est positionné, qui permet une détection anticipée de dysfonctionnement potentiel d'un module de stockage d'énergie.

Le matériau actif de l'électrode négative 15 peut être tel que le métal du nitrure de lithium-métal est choisi parmi le groupe des métaux de transition.

Plus spécifiquement, les inventeurs ont pu noter que le matériau actif de l'électrode négative 15 pouvait être composé au moins en partie de nitrure de lithium-manganèse dont la formule est Li₇₋ₓMnN₄ avec x ≤ 2,0 et/ou de nitrure de lithium-fer dont la formule est Li₃₋ₓFeN₂, avec x ≤ 1,2. Le potentiel électrochimique du nitrure de lithium-manganèse par rapport au lithium est de 1,18 V, et le potentiel électrochimique du nitrure de lithium-fer est de 1,24 V pour des capacités spécifiques élevés, respectivement 300 mAh/g et 200 mAh/g, disponibles à un potentiel plus bas (-0,25 V) que le potentiel de travail (1.5V) du Lithium Titane Oxyde (LTO : Li₄Ti₅O₁₂). Le Lithium Titane Oxyde, avec une capacité spécifique limitée à 150 mAh/g, est le matériau d'électrode négative le plus performant actuellement pour les batteries lithium-ion de puissance. Le nitrure de lithium-manganèse et le nitrure de lithium-fer présentent donc une densité d'énergie plus importante. Le nitrure de lithium-manganèse et le nitrure de lithium-fer présentent également une bonne tenue à l'application de fortes densités de courant, ce qui est particulièrement avantageux pour des accumulateurs de véhicules hybrides.

L'agent de conduction électronique et le liant peuvent être respectivement ceux décrits ci-avant pour l'électrode positive 13 de l'accumulateur d'énergie électrique 5.

La teneur en matériau actif de l'électrode négative 15 peut être d'au moins 60 % en poids, la teneur en agent de conduction électronique peut être de 0 à 30% en poids, et la teneur en liant peut être de 0 à 30% en poids, par rapport au poids total de l'électrode négative 15.

Le séparateur 17, localisé entre les électrodes d'un accumulateur d'énergie électrique 5, joue le rôle d'isolant électrique. Le séparateur 17 est généralement composé de polymères poreux, notamment en polyoléfine, de préférence en polyéthylène et/ou en polypropylène. Il peut également être en microfibres de verre. Le séparateur 17 peut être un séparateur en microfibres de verre CAT No. 1823-070^{®} commercialisé par Whatman.

Le séparateur est généralement imbibé d'au moins une solution d'électrolytes. Les électrolytes utilisés comprennent au moins un sel de lithium et au moins un solvant.

Le sel de lithium peut être un sel inorganique comme par exemple l'hexafluorophosphate de lithium (LiPF₆). Le sel de lithium peut aussi être un sel organique comme par exemple le bis[(trifluorométhyl)sulfonyl]imide de lithium (LiN(CF₃SO₂)₂), le trifluorométhane sulfonate de lithium (LiCFsSOs), le bis(oxalato)borate de lithium (LiBOB) ou encore le fluoro(oxolato)borate de lithium (LiFOB).

Le sel de lithium est, de préférence, dissous dans au moins un solvant choisis parmi les solvants polaires aprotiques, par exemple, le carbonate d'éthylène (noté « EC »), le carbonate de propylène (noté « PC »), le carbonate de diméthyle (noté « DMC »), le carbonate de diéthyle (noté « DEC ») et le carbonate d'éthyle et de méthyle (noté « EMC »).

A la suite d'un choc entraînant une déformation d'un ou plusieurs accumulateurs 5 ou bien à la suite d'une usure accélérée de l'un de ces accumulateurs, au moins une enveloppe 21 protégeant un coeur électrochimique 19 d'un accumulateur d'énergie électrique 5 peut être endommagée et par conséquent laisser passer de l'air. L'électrode négative 15 est alors exposée à de l'air et/ou à de l'humidité contenue dans l'air. Cette exposition provoque la décomposition du nitrure de lithium-métal de l'électrode négative 15 et il en résulte un dégagement d'ammoniac.

Le capteur d'ammoniac 11 présent dans le module de stockage d'énergie électrique 3 est alors apte à détecter les molécules d'ammoniac dégagées par la décomposition du nitrure de lithium-métal. Etant donné que le capteur d'ammoniac 11 est spécifique à l'ammoniac, il est donc indépendant des conditions environnementales et le seuil de détection peut être très faible, de sorte qu'un avertissement d'un dysfonctionnement est émis dès l'apparition d'ammoniac dans l'air.

Tel qu'évoqué précédemment, le dégagement d'ammoniac qui a lieu selon l'invention lors d'un dysfonctionnement, et plus particulièrement une perte d'étanchéité d'une enveloppe d'un accumulateur 5, tend dans un second temps à la formation de diazote gazeux en présence d'air et à température élevée. Ceci a pour effet de diminuer la quantité de comburant disponible à l'intérieur du module de stockage d'énergie électrique 3 et peut donc retarder l'emballement thermique du module de stockage d'énergie électrique 3 et donc de la batterie électrique 1.

Bien sûr, l'invention n'est pas limitée aux exemples qui viennent d'être décrits. L'objet de l'invention est défini par les revendications.

## Revendications

1. Module de stockage d'énergie électrique (3) pour un véhicule comprenant au moins un accumulateur d'énergie électrique (5) comportant au moins une électrode négative (15) composée au moins en partie de nitrure de lithium-métal, ledit module de stockage d'énergie électrique (3) comportant en outre au moins un capteur d'ammoniac (11) pour détecter un dégagement d'ammoniac due à la décomposition du nitrure de lithium-métal de l'électrode négative (15) en présence d'air ou d'humidité.

2. Module de stockage d'énergie électrique (3) selon la revendication précédente, dans lequel le métal du nitrure de lithium-métal est choisi parmi le groupe des métaux de transition.

3. Module de stockage d'énergie électrique (3) selon l'une des revendications précédentes, dans lequel le métal du nitrure de lithium-métal est choisi parmi le groupe comportant le fer, le manganèse et leur mélange.

4. Module de stockage d'énergie électrique (3) selon l'une quelconque des revendications précédentes, dans lequel le nitrure de lithium-métal est délithié.

5. Module de stockage d'énergie électrique (3) selon l'une quelconque des revendications précédentes, dans lequel le nitrure de lithium-métal est composé au moins en partie de nitrure de lithium-manganèse dont la formule est Li₇₋ₓMnN₄ avec x ≤ 2,0 et/ou de nitrure de lithium-fer dont la formule est Li₃₋ₓFeN₂, avec x ≤ 1,2.

6. Module de stockage d'énergie électrique (3) selon l'une quelconque des revendications précédentes et comportant un boitier (7) formant un logement pour les accumulateurs d'énergie électrique (5), le capteur d'ammoniac (11) étant disposé sur une paroi (9) du boitier (7).

7. Module de stockage d'énergie électrique (3) selon la revendication précédente, dans lequel le capteur d'ammoniac (11) est disposé sur une face interne de la paroi (9) du boitier (7).

8. Module de stockage d'énergie électrique (3) selon l'une quelconque des revendications précédentes, dans lequel le capteur d'ammoniac (11) est choisi parmi un détecteur catalytique, un détecteur catharométrique, un détecteur à rayonnement infra-rouge, un détecteur électrochimique ou un détecteur à photoionisation.

9. Batterie électrique (1) pour véhicule comprenant une pluralité de modules de stockage d'énergie, dans laquelle au moins un module de stockage d'énergie électrique (3) de la pluralité de modules de stockage d'énergie est selon l'une quelconque des revendications précédentes.

10. Véhicule comprenant au moins une batterie électrique (1) selon la revendication précédente.

## Patentansprüche

1. Modul zur Speicherung elektrischer Energie (3) für ein Fahrzeug umfassend wenigstens einen Akkumulator elektrischer Energie (5), der wenigstens eine negative Elektrode (15) beinhaltet, die wenigstens teilweise aus Lithium-Metallnitrid zusammengesetzt ist, wobei das Modul zur Speicherung elektrischer Energie (3) ferner wenigstens einen Ammoniaksensor (11) beinhaltet, um eine Abgabe von Ammoniak aufgrund des Zerfalls des Lithium-Metallnitrids der negativen Elektrode (15) bei Vorhandensein von Luft oder Feuchtigkeit zu detektieren.

2. Modul zur Speicherung elektrischer Energie (3) nach dem vorhergehenden Anspruch, wobei das Metall des Lithium-Metallnitrids aus der Gruppe der Übergangsmetalle gewählt ist.

3. Modul zur Speicherung elektrischer Energie (3) nach einem der vorhergehenden Ansprüche, wobei das Lithium-Metallnitrid aus der Gruppe gewählt ist, die Eisen, Mangan und deren Gemisch beinhaltet.

4. Modul zur Speicherung elektrischer Energie (3) nach einem der vorhergehenden Ansprüche, wobei das Lithium-Metallnitrid dilithiiert ist.

5. Modul zur Speicherung elektrischer Energie (3) nach einem der vorhergehenden Ansprüche, wobei das Lithium-Metallnitrid wenigstens teilweise aus Lithium-Mangannitrid, dessen Formel Li₇₋ₓMnN₄ ist, mit x ≤ 2,0, und/oder Lithium-Eisennitrid, dessen Formel Li₃₋ₓFeN₂ ist, mit x ≤ 1,2, zusammengesetzt ist.

6. Modul zur Speicherung elektrischer Energie (3) nach einem der vorhergehenden Ansprüche und das ein Gehäuse (7) beinhaltet, das eine Aufnahme für die Akkumulatoren elektrischer Energie (5) beinhaltet, wobei der Ammoniaksensor (11) auf einer Wand (9) des Gehäuses (7) angeordnet ist.

7. Modul zur Speicherung elektrischer Energie (3) nach dem vorhergehenden Anspruch, wobei der Ammoniaksensor (11) auf einer Innenfläche der Wand (9) des Gehäuses (7) angeordnet ist.

8. Modul zur Speicherung elektrischer Energie (3) nach einem der vorhergehenden Ansprüche, wobei der Ammoniaksensor (11) aus einem katalytischen Detektor, einem katharometrischen Detektor, einem Infrarotstrahlungsdetektor, einem elektrochemischen Detektor oder einem Photoionisationsdetektor gewählt ist.

9. Elektrische Batterie (1) für ein Fahrzeug umfassend eine Mehrzahl von Energiespeichermodulen, wobei wenigstens ein Modul zur Speicherung elektrischer Energie (3) der Mehrzahl von Energiespeichermodulen nach einem der vorhergehenden Ansprüche beschaffen ist.

10. Fahrzeug umfassend wenigstens eine elektrische Batterie (1) nach dem vorhergehenden Anspruch.

## Claims

1. Module (3) for storing electrical energy for a vehicle comprising at least one electrical-energy accumulator (5) comprising at least one negative electrode (15) composed at least partially of lithium-metal nitride, said module (3) for storing electrical energy further comprising at least one ammonia sensor (11) for detecting a release of ammonia due to the decomposition of the lithium-metal nitride of the negative electrode (15) in the presence of air or of moisture.

2. Module (3) for storing electrical energy according to the preceding claim, wherein the metal of the lithium-metal nitride is chosen from the group of the transition metals.

3. Module (3) for storing electrical energy according to one of the preceding claims, wherein the metal of the lithium-metal nitride is chosen from the group comprising iron, manganese and an alloy thereof.

4. Module (3) for storing electrical energy according to any one of the preceding claims, wherein the lithium-metal nitride is delithiated.

5. Module (3) for storing electrical energy according to any one of the preceding claims, wherein the lithium-metal nitride is at least partially composed of lithium-manganese nitride the formula of which is Li₇₋ₓMnN₄ with x ≤ 2.0 and/or of lithium-iron nitride the formula of which is Li₃₋ₓFeN₂, with x ≤ 1.2.

6. Module (3) for storing electrical energy according to any one of the preceding claims and comprising a casing (7) forming a housing for the electrical-energy accumulators (5), the ammonia sensor (11) being placed on a wall (9) of the casing (7).

7. Module (3) for storing electrical energy according to the preceding claim, wherein the ammonia sensor (11) is placed on an internal face of the wall (9) of the casing (7).

8. Module (3) for storing electrical energy according to any one of the preceding claims, wherein the ammonia sensor (11) is chosen from a catalytic detector, a thermal-conductivity detector, a detector of infrared radiation, an electrochemical detector, and a photoionization detector.

9. Vehicle electrical battery (1) comprising a plurality of energy-storing modules, wherein at least one module (3) for storing electrical energy of the plurality of energy-storing modules is according to any one of the preceding claims.

10. Vehicle comprising at least one electrical battery (1) according to the preceding claim.
